# FASCICULE DE BREVET EUROPEEN

(11) **EP 1 087 886 B1**
(45) Date de publication et mention de la délivrance du brevet: **05.11.2003**
(21) Numéro de dépôt: 99957631.7
(22) Date de dépôt: 24.06.1999
(51) Int. Cl.: B64B 1/58

(54) **RENFORT D'OUVERTURE POUR ENVELOPPE D'AEROSTAT**
ÖFFNUNGSVERSTÄRKUNG FÜR LUFTBALLONS
OPENING REINFORCEMENT FOR AEROSTAT ENVELOPE

(30) Priorité: 26.06.1998 FR 9808154
(43) Date de publication de la demande: 04.04.2001
(73) Titulaire: CENTRE NATIONAL D'ETUDES SPATIALES, F-75039 Paris Cedex 01 (FR)
(72) Inventeur: CASTERAS, Christophe, René, Jacques, Marie, F-31400 Toulouse (FR)
(74) Mandataire: Colas, Jean-Pierre
(86) Numéro de dépôt international: FR9901521
(87) Numéro de publication internationale: WO00000386

(56) Documents cités:
- EP-A- 0 025 384
- WO-A-96/12642
- US-A- 3 362 275

## Description

La présente invention se rapporte à un dispositif de renfort d'ouverture pour une enveloppe souple destinée à être tendue, telle qu'une enveloppe d'aérostat.

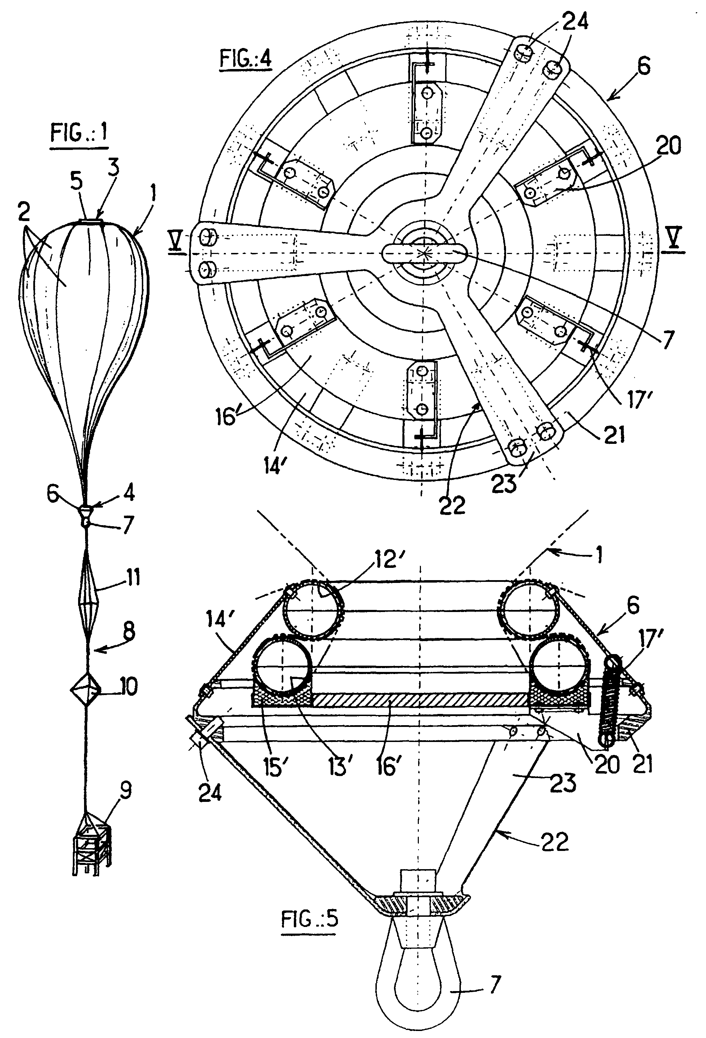

On se réfère à la figure 1 du dessin annexé, sur laquelle on a représenté une vue d'ensemble d'un aérostat expérimental classique, appelé encore « ballon-sonde ».

Comme on peut le voir sur cette figure, un tel aérostat comporte, typiquement, une enveloppe souple 1 remplie d'un gaz plus léger que l'air tel que de l'hydrogène ou de l'hélium.

Cette enveloppe est constituée par une pluralité de fuseaux de film plastique 2 soudés entre eux dans le sens méridien et convergeant vers une partie supérieure 3 de l'aérostat appelée « pôle nord », et vers une partie inférieure 4 de l'aérostat appelée « pôle sud ».

Classiquement, les fuseaux 2 formant l'enveloppe 1 sont réalisés en polyéthylène renforcé par des fibres de polyester, et les zones polaires 3, 4 de l'enveloppe 1 comportent des dispositifs de renfort d'ouverture 5, 6 consistant soit en brides-couronnes fixées par des vis-écrous, soit en pièces collées sur l'enveloppe.

Le dispositif de renfort d'ouverture 6 du pôle sud du ballon comporte un anneau 7 destiné à supporter une chaîne de vol 8, comprenant typiquement une nacelle 9 pouvant emporter des instruments scientifiques, un réflecteur radar 10 et un parachute 11.

Pour améliorer le rapport résistance/masse des enveloppes des aérostats expérimentaux et permettre ainsi d'embarquer des charges utiles plus importantes, on a été conduit récemment à utiliser des nouveaux matériaux composites pour former ces enveloppes.

Ainsi par exemple, pour une certaine catégorie d'aérostats expérimentaux dits « Ballons Stratosphériques Ouverts à Enveloppe Nouvelle Génération (BSO-ENG)», on utilise des enveloppes constituées par des fuseaux en polyester de très faible épaisseur renforcé par des fibres en carbone ou en polyéthylène orienté.

Ces matériaux extrêmement légers présentent malheureusement l'inconvénient d'être peu résistants aux déchirures pouvant résulter d'efforts de cisaillement, c'est-à-dire d'efforts appliqués transversalement au plan de l'enveloppe.

Pour cette raison, les dispositifs classiques de renfort d'ouverture des pôles, qui induisent d'importants efforts de cisaillement sur les fuseaux, sont inadaptés aux enveloppes dites « de nouvelle génération ».

On connaît du document US 3 362 275 des moyens pour tendre une peau de tambour sur un corps de tambour, du type comprenant des premier et deuxième organes annulaires, ces organes étant disposés de manière que ladite peau puisse passer successivement sur les parties intérieures des surfaces desdits premier et deuxième organes, sur la partie extérieure de la surface dudit deuxième organe, puis à nouveau sur la partie intérieure de la surface dudit premier organe, entre elle-même et cette partie intérieure.

Dans ce dispositif de la technique antérieure, la peau est tendue sur un bord du corps du tambour situé radialement à l'intérieur du contour défini par les organes annulaires, et subit de ce fait des efforts de cisaillement très importants.

Ainsi, même s'il est vrai que ce dispositif de la technique antérieure enseigne une façon de relier une enveloppe souple à un support de forme sensiblement annulaire, il n'est pas utilisable tel quel pour résoudre le problème de renfort d'ouverture d'une enveloppe présentant une faible résistance au cisaillement, telle qu'une enveloppe d'aérostat du type BSO-ENG susmentionné.

La présente invention a pour but de fournir des moyens adaptés pour renforcer une ouverture d'enveloppe notamment d'aérostat du type BSO-ENG susmentionné.

On atteint ce but de l'invention avec un dispositif de renfort d'ouverture conforme à la revendication 1 ci-annexée.

Grâce à ce dispositif, l'enveloppe souple ne s'appuie plus sur un bord fortement cisaillant comme c'était le cas dans le document US 3 362 275.

En outre, un tel dispositif peut être réalisé avec un nombre limité de pièces, ce qui permet de réduire le coût de fabrication ainsi que la masse.

D'autres caractéristiques et avantages de la présente invention apparaîtront à la lecture de la description qui va suivre et à l'examen du dessin annexé, dans lequel:
- la figure 1 est une vue d'ensemble d'un aérostat expérimental, décrit en préambule à la présente description,
- la figure 2 est une vue de dessus d'un dispositif de renfort d'ouverture selon l'invention destiné à renforcer le pôle nord de l'enveloppe d'un aérostat expérimental,
- la figure 3 est une vue de ce dispositif de renfort d'ouverture selon la coupe III-III de la figure 2,
- la figure 4 est une vue de dessous d'un dispositif de renfort d'ouverture selon l'invention destiné à renforcer le pôle sud de l'enveloppe d'un aérostat expérimental,
- la figure 5 est une vue de ce dispositif de renfort d'ouverture selon la coupe V-V de la figure 4.

Sur ces figures, des références numériques identiques représentent des organes identiques ou analogues.

Dans ce qui suit, on va décrire le dispositif de renfort d'ouverture selon l'invention lorsqu'il est incorporé à un aérostat expérimental, car il se trouve qu'il est particulièrement bien adapté à cette application.

Cela dit, il faut garder à l'esprit que ce dispositif de renfort d'ouverture pourrait également convenir à toute autre application dans laquelle on cherche à bloquer une enveloppe souple destinée à être tendue.

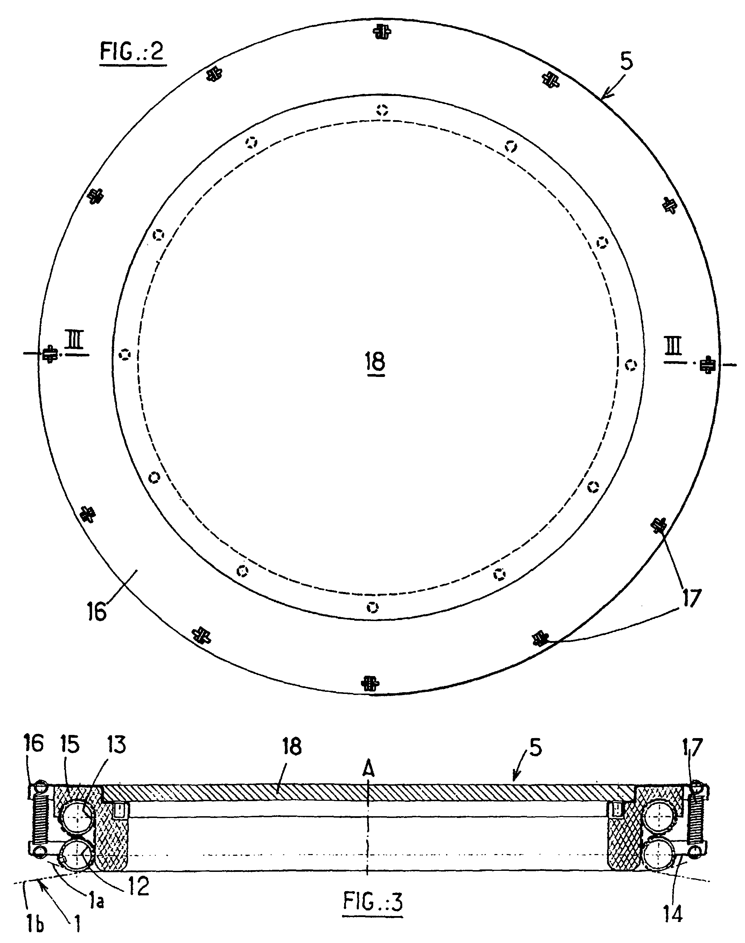

On se reporte à présent aux figures 2 et 3, sur lesquelles on a représenté un premier dispositif de renfort d'ouverture 5 destiné à renforcer le pôle nord de l'enveloppe 1 d'un ballon expérimental.

Comme on peut le voir sur ces figures, ce premier dispositif de renfort d'ouverture comporte des premier 12 et deuxième 13 organes annulaires adjacents s'étendant à sa périphérie, ces organes étant en outre, de préférence, tubulaires et toroïdaux de même rayon.

Une première bride annulaire 14 est fixée sur la périphérie extérieure du premier organe annulaire 12.

Un joint annulaire 15 est conformé de manière à pouvoir s'encastrer sur le deuxième organe annulaire 13.

Une deuxième bride annulaire 16 est posée sur le joint 15.

Une pluralité de ressorts 17 tendus entre les première 14 et deuxième 16 brides les rappellent l'une vers l'autre.

Un couvercle 18 fixé de manière étanche sur la deuxième bride 16 permet de fermer le dispositif de renfort d'ouverture.

On peut éventuellement prévoir un système (non représenté) d'ouverture télécommandée de ce couvercle, afin de libérer progressivement le gaz contenu dans l'enveloppe 1.

A titre indicatif, les premier 12 et deuxième 13 organes annulaires et les première 14 et deuxième 16 brides peuvent être formés dans de l'aluminium, ou dans un alliage léger. Le joint 15 peut être formé dans un matériau élastomère à alvéoles fermés.

La mise en place du dispositif de renfort d'ouverture 5 sur le pôle nord de l'enveloppe 1 de l'aérostat s'effectue de la manière suivante (cette enveloppe est représentée en trait mixte sur la figure 3).

L'enveloppe 1 de l'aérostat étant vide de gaz, on prend le premier organe annulaire 12 sur lequel est fixée la première bride 14, et on le pose autour de l'orifice polaire de l'enveloppe.

On superpose ensuite le deuxième organe annulaire 13 sur le premier organe annulaire 12.

On attrape l'enveloppe 1 par son bord libre 1a, et on la fait passer sur les parties intérieures des surfaces des premier 12 et deuxième 13 organes annulaires (c'est à dire sur les parties de ces surfaces qui sont situées en vis-à-vis de l'axe A du dispositif de renfort d'ouverture).

On rabat ensuite l'enveloppe 1 autour du deuxième organe annulaire 13, de manière à la faire passer sur la partie extérieure de la surface de cet organe.

On fait ensuite à nouveau passer l'enveloppe 1 sur la partie intérieure de la surface du premier organe annulaire 12, entre elle-même et cette partie, et on amène son bord libre la jusqu'à la partie extérieure de la surface de cet organe.

On encastre ensuite le joint 15 sur le deuxième organe annulaire 13, puis on pose la deuxième bride 16 sur le joint 15.

On tend ensuite les ressorts 17 entre les première 14 et deuxième 16 brides, puis on fixe le couvercle 18 sur la deuxième bride 16.

Lorsque l'on gonfle l'aérostat, on met l'enveloppe 1 sous tension. La portion de cette enveloppe sous tension qui s'étend autour du dispositif de renfort d'ouverture 5 est désignée par la référence 1b sur la figure 3.

Comme on peut le comprendre d'après la description de la façon dont on enroule l'enveloppe 1 autour des premier 12 et deuxième 13 organes annulaires, la mise sous tension de l'enveloppe 1 a pour effet de bloquer celle-ci contre ces organes.

En effet, l'enveloppe 1 tendue plaque le deuxième organe annulaire 13 contre le premier organe annulaire 12, coinçant ainsi la portion d'enveloppe qui passe entre ces deux organes.

De plus, l'enveloppe 1 tendue coince la portion d'enveloppe qui passe entre la partie intérieure de la surface du premier organe annulaire 12 et elle-même.

Les ressorts 17, qui permettent de rappeler les premier 12 et deuxième 13 organes annulaires l'un contre l'autre, assurent le blocage de l'enveloppe 1 même lorsqu'elle n'est pas sous tension.

Ces ressorts permettent également de plaquer le joint 15 contre le deuxième organe annulaire 13, afin d'obtenir l'étanchéité du dispositif de renfort d'ouverture.

Comme on peut le comprendre à présent, le dispositif de renfort d'ouverture 5 permet de s'affranchir des risques de cisaillement de l'enveloppe 1 : il suffit pour cela de choisir des rayons suffisamment grands pour les sections sensiblement circulaires des premier 12 et deuxième 13 organes annulaires.

On voit aussi que le dispositif de renfort d'ouverture 5 peut être réalisé avec un nombre de pièces limité : très peu de vis sont nécessaires, contrairement aux dispositifs traditionnels de renfort des pôles.

On voit enfin que le dispositif de renfort d'ouverture 5 peut être démonté très facilement, alors que cela est difficile dans les dispositifs de renfort traditionnels.

On se reporte à présent aux figures 4 et 5, sur lesquelles on a représenté un deuxième dispositif de renfort d'ouverture 6, destiné à renforcer le pôle sud de l'enveloppe 1 d'un aérostat expérimental.

La plupart des pièces composant ce deuxième dispositif de renfort d'ouverture sont analogues à celles composant le premier dispositif de renfort d'ouverture 5. Aussi se contentera-t-on de les décrire très brièvement, sans développer leurs fonctions.

Comme on peut le voir sur les figures 4 et 5, le deuxième dispositif de renfort d'ouverture 6 comporte des premier 12' et deuxième 13' organes annulaires adjacents s'étendant à sa périphérie, ces organes étant en outre, de préférence, tubulaires et toroïdaux.

De préférence également, le rayon du premier organe annulaire 12' est légèrement inférieur à celui du deuxième organe annulaire 13'.

Cette différence de rayons permet de maintenir l'enveloppe 1 en contact avec le premier organe annulaire 12' quelle que soit l'inclinaison de cette enveloppe par rapport à cet organe. Cette caractéristique permet notamment de garantir le blocage de l'enveloppe pendant la phase de gonflage.

Une bride annulaire 14', définissant un volume sensiblement tronconique, est fixée sur la périphérie extérieure du premier organe annulaire 12'.

Un joint annulaire 15' est conformé de manière à pouvoir s'encastrer sur le deuxième organe annulaire 13'.

Une bride circulaire 16' formant couvercle est posée sur le joint 15'.

Une pluralité de ressorts 17' tendus entre la bride 14' et des équerres 20 solidaires de la bride 16' ont pour effet de rappeler ces brides l'une vers l'autre.

A la différence du premier dispositif de renfort d'ouverture 5, le deuxième dispositif de renfort d'ouverture 6 comporte également une bague 21 fixée sur la périphérie de la bride 14' et supportant un ensemble d'anneau 22.

Cet ensemble d'anneau peut comporter par exemple un trépied 23 fixé par des vis 24 sur la bague 21 et supportant l'anneau 7 mentionné précédemment.

Bien entendu, l'invention n'est pas limitée au mode de réalisation et à l'application décrits et représentés qui n'ont été donnés qu'à titre d'exemple.

A titre illustratif et non limitatif, c'est ainsi que l'on pourrait aussi utiliser le dispositif de renfort d'ouverture selon l'invention pour réaliser les orifices de gonflage d'embarcations gonflables du type « ZODIAC » (marque déposée).

C'est ainsi encore que les organes annulaires décrits ci-dessus pourraient présenter un contour autre que circulaire, elliptique par exemple, pour autant de préférence que ce contour soit bouclé et dépourvu de discontinuité.

## Revendications

1. Dispositif de renfort d'ouverture (5,6) pour une enveloppe souple destinée à être tendue, telle qu'une enveloppe d'aérostat (1), comprenant :
a) des premier (12 ; 12') et deuxième (13 ; 13') organes annulaires adjacents,
b) ladite enveloppe souple, comprenant une partie destinée à être tendue (1b) et une partie passant successivement sur les parties intérieures des surfaces desdits premier (12; 12') et deuxième (13; 13') organes annulaires, sur la partie extérieure de la surface dudit deuxième organe annulaire (13; 13'), puis à nouveau sur la partie intérieure de la surface dudit premier organe annulaire (12; 12'), entre elle-même et cette partie intérieure,
**caractérisé en ce que** ladite partie destinée à être tendue (1b) s'étend radialement vers l'extérieur dudit premier organe annulaire (12 ; 12') lorsqu'elle est tendue.

2. Dispositif selon la revendication 1, **caractérisé en ce qu'**il comprend des moyens de rappel (17; 17') desdits premier (12; 12') et deuxième (13; 13') organes l'un contre l'autre, afin de bloquer ladite enveloppe (1) lorsqu'elle n'est pas sous tension.

3. Dispositif selon la revendication 2, **caractérisé en ce qu'**il comprend une première bride (14; 14') fixée sur la périphérie dudit premier organe (12; 12'), une deuxième bride (16; 16') posée sur ledit deuxième organe (13; 13'), et une pluralité de ressorts (17; 17') tendus entre lesdites première et deuxième brides.

4. Dispositif selon la revendication 3, **caractérisé en ce qu'**il comprend un joint (15; 15') interposé entre ladite deuxième bride (16; 16') et ledit deuxième organe (13; 13'), de manière à permettre une fermeture étanche de ladite région d'ouverture.

5. Dispositif selon l'une des revendications 3 ou 4, **caractérisé en ce qu'**il comporte un anneau de support de charge (7) fixé à ladite première bride (14').

6. Dispositif selon l'une quelconque des revendications précédentes, **caractérisé en ce que** lesdits premier (12; 12') et deuxième (13; 13') organes sont tubulaires et toroïdaux.

7. Dispositif selon la revendication 6, **caractérisé en ce que** lesdits premier (12) et deuxième (13) organes ont le même rayon.

8. Dispositif selon la revendication 6, **caractérisé en ce que** ledit premier organe (12') a un rayon légèrement inférieur à celui dudit deuxième organe (13').

9. Aérostat, (1) **caractérisé en ce qu'**il présente au moins un dispositif selon l'une quelconque des revendications précédentes, dans la région du pôle nord (3) ou du pôle sud (4).

## Patentansprüche

1. Öffnungsverstärkungsvorrichtung (5, 6) für eine zum Dehnen vorgesehene elastische Hülle, beispielsweise die Hülle eines Luftballons (1), mit:
a) einem ersten (12; 12') und einem zweiten (13: 13') ringförmigen Element, die benachbart sind;
b) wobei die elastische Hülle einen spannbaren Teil (1b) und einen Teil, der sich nacheinander über die Innenbereiche der Oberflächen des ersten (12; 12') und des zweiten ringförmigen Elements (13; 13'), den Außenbereich der Oberfläche des zweiten ringförmigen Elements (13; 13') und anschließend erneut über den Innenbereich der Oberfläche des ersten ringförmigen Elements (12; 12') zwischen sich selbst und dem Innenbereich erstreckt, aufweist
**dadurch gekennzeichnet, daß** der spannbare Teil (1b) sich radial zur Außenseite des ersten ringförmigen Elements (12; 12') erstreckt, wenn er gespannt ist.

2. Vorrichtung nach Anspruch 1, **dadurch gekennzeichnet, daß** sie eine Einrichtung (17; 17') zum Rückstellen des ersten (12; 12') und des zweiten (13; 13') Elements gegeneinander aufweist, um die Hülle (1) zu blockieren, wenn sie nicht unter Spannung steht.

3. Vorrichtung nach Anspruch 2, **dadurch gekennzeichnet, daß** sie einen ersten Flansch (14; 14'), der am Umfang des ersten Elements (12; 12') befestigt ist, einen zweiten Flansch (16; 16'), der auf dem zweiten Element (13; 13') angeordnet ist, und mehrere Federn (17; 17') aufweist, die zwischen dem ersten und dem zweiten Flansch gespannt sind.

4. Vorrichtung nach Anspruch 3, **dadurch gekennzeichnet, daß** sie eine Dichtung (15; 15') aufweist, die zwischen dem zweiten Flansch (16; 16') und dem zweiten Element (13; 13') derart angeordnet ist, daß ein dichter Abschluß des Öffnungsbereichs möglich ist.

5. Vorrichtung nach einem der Ansprüche 3 oder 4, **dadurch gekennzeichnet, daß** er einen Lastenaufhängungsring (7) aufweist, der an dem ersten Flansch (14') befestigt ist.

6. Vorrichtung nach einem der vorhergehenden Ansprüche, **dadurch gekennzeichnet, daß** das erste (12; 12') und das zweite Element (13; 13') rohrförmig und toroid ausgebildet sind.

7. Vorrichtung nach Anspruch 6, **dadurch gekennzeichnet, daß** das erste (12) und das zweite Element (13) den gleichen Radius haben.

8. Vorrichtung nach Anspruch 6, **dadurch gekennzeichnet, daß** das erste Element (12') einen geringfügig kleineren Radius hat als das zweite Element (13').

9. Ballon (1), **dadurch gekennzeichnet, daß** er am oberen Ende (3) oder am unteren Ende (4) wenigstens eine Vorrichtung nach einem der vorhergehenden Ansprüche aufweist.

## Claims

1. An aperture-reinforcing device (5, 6) for a flexible envelope intended to be tensioned, such as an aerostat envelope, comprising:
a) first (12 ; 12') and second (13; 13') adjacent annular members,
b) said flexible envelope, comprising a part intended to be tensioned (1b) and a part passing successively over the inside parts of the surfaces of said first (12; 12') and second (13; 13') annular members, over the outside part of the surface of said second annular member (13; 13'), and then again over the inside part of the surface of said first annular member (12; 12'), between itself and said inside part,
**characterized in that** said part intended to be tensioned (1b) extends radially outwards of said first annular member (12; 12') when it is tensioned.

2. The device according to claim 1, **characterized in that** it comprises means (17 ; 17') for urging said first (12; 12') and second (13; 13') members together to immobilize said envelope (1) when it is not tensioned.

3. The device according to claim 2, **characterized in that** it comprises a first flange (14; 14') fixed to the periphery of said first annular member (12, 12'), a second flange (16; 16') placed over said second member (13; 13'), and a plurality of springs (17; 17') tensioned between said first and second flanges.

4. The device according to claim 3, **characterized in that** it comprises a seal (15; 15') disposed between said second flange (16; 16') and said second member (13; 13') to enable sealed closure of said aperture area.

5. The device according to claim 3 or 4, **characterized in that** it comprises a load-support ring (7) fixed to said first flange (14').

6. The device according to any of the preceding claims, **characterized in that** said first (12; 12') and second (13; 13') members are tubular and toroidal.

7. The device according to claim 6, **characterized in that** said first (12) and second (13) members have the same radius.

8. The device according to claim 6, **characterized in that** said first member (12') has a radius slightly less than that of said second member (13').

9. An aerostat (1), **characterized in that** it comprises at least one device according to any of preceding claims in the area of north pole (3) or south pole (4).
